# EUROPÄISCHE PATENTSCHRIFT

(11) **EP 1 389 697 B1**
(45) Veröffentlichungstag und Bekanntmachung des Hinweises auf die Patenterteilung: **11.03.2009**
(21) Anmeldenummer: 03016854.6
(22) Anmeldetag: 24.07.2003
(51) Int. Cl.: F16H 57/04

(54) **Getriebe für ein Kraftfahrzeug sowie Verdrängungskörper für ein derartiges Getriebe**
Transmission for a vehicle and a volume displacement body for such a transmission
Boîte de vitesses pour un véhicule ainsi qu' un corps utilisé pour le déplacement de volume pour une telle boîte de vitesses

(30) Priorität: 15.08.2002 DE 10238000
(43) Veröffentlichungstag der Anmeldung: 18.02.2004
(73) Patentinhaber: GETRAG Getriebe- und Zahnradfabrik Hermann Hagenmeyer GmbH & Cie KG, 74199 Untergruppenbach (DE)
(72) Erfinder: Nägele, Frank, 74394 Hessigheim (DE)
(74) Vertreter: Steil, Christian

(56) Entgegenhaltungen:
- DE-A1- 3 630 973
- DE-A1- 4 108 657
- DE-A1- 4 132 780
- DE-A1- 19 644 738
- DE-U- 7 326 632
- FR-A- 2 760 262
- GB-A- 2 147 064
- GB-A- 2 180 603
- US-A- 4 414 861
- US-A- 4 721 184
- US-A- 5 092 196
- PATENT ABSTRACTS OF JAPAN Bd. 1997, Nr. 01, 31. Januar 1997 (1997-01-31) -& JP 08 233075 A (HINO MOTORS LTD), 10. September 1996 (1996-09-10)

## Beschreibung

Die Erfindung betrifft ein Getriebe für ein Kraftfahrzeug, mit wenigstens einem Radsatz zur Kraftübertragung und einem Gehäuse, in dem der Radsatz gelagert ist und das einen fluiden Schmierstoff für den Radsatz, insbesondere Getriebeöl, sowie ein Gas, insbesondere Luft, enthält, wobei in dem Gehäuse ein Verdrängungskörper für den Schmierstoff angeordnet ist, der zumindest überwiegend in den Schmierstoff eingetaucht ist, und wobei das Sollvolumen des in dem Gehäuse befindlichen Schmierstoffes so gewählt ist, daß wenigstens ein unteres Rad des Radsatzes auch unter ungünstigen Betriebsbedingungen in den Schmierstoff eintaucht.

Ein solches Getriebe und ein solcher Verdrängungskörper sind aus der nächsliegenden Stand der Technik-Druckschrift US-A-5,092,196, und weiter aus der DE 36 30 973 A1 sowie aus der DE 196 44 738 A1 und der DE 38 17 981 Cl bekannt.

Getriebe, insbesondere Stirnradgetriebe, für Kraftfahrzeuge müssen im Betrieb ständig geschmiert werden, damit die erwartete Lebensdauer erreicht werden kann. Dies betrifft natürlich die Lager, insbesondere aber auch die miteinander kämmenden Zahnräder.

Üblich ist es, in das Getriebegehäuse so viel Schmierstoff einzufüllen, daß zumindest ein Rad, in der Regel alle unten liegenden Räder in den Schmierstoff eintauchen und folglich im Betrieb Schmierstoff mitreißen, um auch obenliegende Teile des Getriebes, z.B. obere Zahnräder, zu schmieren.

Das eingefüllte Sollvolumen des Schmiermittels führt bei vorgegebenem Gehäusevolumen zu einem bestimmten Pegel bzw. Spiegel des Schmierstoffes im Ruhezustand. Dieser Pegel variiert in Abhängigkeit von der Temperatur. Im Betrieb sinkt der Pegel, da ständig ein gewisses Teilvolumen des Schmierstoffes durch das Mitreißen der unteren Räder auf zu schmierende Stellen aufgebracht ist. Es versteht sich, daß selbst unter ungünstigen Betriebsbedingungen, also bei niedrigen Temperaturen, hoher Drehzahl der Getriebeelemente und ggf. Neigung des Fahrzeugs eine Schmierung aufrechterhalten werden soll. Das bedeutet, daß die unteren Räder auch unter diesen ungünstigen Betriebsbedingungen in der Regel noch in den Schmierstoff eintauchen müssen.

Ein zu hoher Pegel des Schmierstoffes bedeutet andererseits hohe Panschverluste durch Reibung und verschlechtert den Wirkungsgrad des Getriebes. Bei extremer Überfüllung ist es sogar möglich, daß das Getriebe die maximal zulässige Betriebstemperatur überschreitet.

Der Pegel des Schmierstoffes in dem Getriebe hängt, wie oben erwähnt, von dem eingefüllten Schmierstoffvolumen, der Temperatur, der Innengeometrie des Getriebegehäuses sowie von der Geometrie der Radsätze (einschließlich der Schalteinrichtungen) ab.

Die Form des Getriebegehäuses hängt von vielen Parametern ab, unter anderem von der jeweiligen Einbaulage innerhalb des Fahrzeuges, von der Materialwahl des Getriebegehäuses, etc.

Ferner wird bei manchen Fahrzeugmodellen dasselbe Getriebegehäuse für unterschiedliche Radsätze verwendet, die bspw. an unterschiedliche Motorisierungen angepaßt sind.

Das aus der DE 41 08 657 A1 bekannte Getriebe weist ein Gehäuse mit bewegten Gliedern auf. Das Gehäuse enthält Ö1 und Luft. Ein geschlossener Behälter ist oberhalb des Bodens des Gehäuses befestigt. Der Behälter ist mit einer Lufttauschöffnung oberhalb des höchsten Ölspiegels und mit einer Öltauschöffnung in Höhe des tiefsten Ölspiegels verbunden. Der Behälter verhindert als Verdränger, daß der Ölspiegel bei tiefer Temperatur zu tief sinkt, und als Speicher, daß der Ölspiegel bei steigender Temperatur zu hoch ansteigt. Die bewegten Glieder sind immer oberhalb des Ölspiegels angeordnet.

Ferner offenbart die DE 41 32 780 A1 ein Zahnradgetriebe mit mindestens zwei kämmenden Zahnrädern, von denen das untere in einen Ölsumpf eintaucht. An einer Stirnseite der Zahnräder unterhalb des Einlaufzwickels ist eine Ölsammelwanne vorgesehen. Die Ölsammelwanne ist oberhalb des Ölsumpfes angeordnet und dient dazu, im Bereich des Einlaufzwickels ausgepreßtes Ö1 aufzufangen. In einer besonderen Ausgestaltung dient die Wanne als Sekundärölsumpf für ein Zahnrad, das oberhalb des Primärölsumpfes angeordnet ist und mit einem dritten Zahnrad kämmt.

Vor diesem Hintergrund besteht das der Erfindung zugrundeliegende Problem darin, ein verbessertes Getriebe mit optimaler Schmierung bei konstruktiv variablem und doch einfachem Aufbau anzugeben.

Diese Aufgabe wird durch ein Getriebe mit den Merkmalen des Anspruchs 1 gelöst, wobei der Verdrängungskörper ein in das Gehäuseinnere weisender Teil eines Gehäusedeckels ist, wobei der Gehäusedeckel einstückig ausgebildet ist und einen ringförmigen Befestigungsabschnitt zur dichtenden Befestigung an dem Gehäuse aufweist, wobei der Befestigungsabschnitt über einen Hohlzylinderabschnitt mit einem Boden des Gehäusedeckels verbunden ist, der gegenüber dem Befestigungsabschnitt zum Getriebeinneren hin versetzt ist, wobei ein weiterer Verdrängungskörper wannenartig geformt ist und das untere Rad, das in den Schmierstoff eintaucht, zumindest teilweise umgibt, derart, daß von dem unteren Rad im Betrieb mitgenommener Schmierstoff auf ein oberes Rad des Radsatzes gelenkt wird, und wobei der wannenförmige Verdrängungskörper ein Hohlkörper ist.

Ein Gehäusedeckel ist oftmals an dem Getriebe ohnehin vorhanden, insbesondere beim wahlweise Verbauen einer Ölpumpe.

Der Grundgedanke der Erfindung besteht nun darin, durch einen in das Innere weisenden Verdrängungskörper, der an dem Gehäusedeckel ausgebildet ist, den Schmierstoffpegel innerhalb des Getriebegehäuses zu erhöhen (bei identischem Ölvolumen).

Hierdurch ist es möglich, konstruktionsbedingte ungünstige Innengeometrien des Getriebegehäuses auszugleichen. Denn durch die konstruktiven Randbedingungen ist die Innengeometrie des Getriebegehäuses häufig derart, daß ein relativ großes Schmierstoffvolumen eingefüllt werden muß, um eine optimale Schmierung der Getriebeelemente zu gewährleisten. Durch den Verdrängungskörper des Gehäusedeckels kann dieses Volumen verringert werden, bei gleichbleibendem Sollpegel des Schmierstoffes.

Dies wiederum bedeutet geringere Kosten im Betrieb, geringeres Gewicht, geringere Schmierstoffbefüllungszeit sowie einen geringeren Schmierstoffbedarf. Demzufolge ist die Erfindung auch unter ökologischen Gesichtspunkten als besonders wertvoll zu betrachten. Ferner ist der Verdrängungskörper gemäß dem ersten Aspekt der Erfindung ohne zusätzliche Verankerungen in dem Getriebegehäuse anzubringen. Die Anbringung erfolgt allein durch die Befestigung des Gehäusedeckels an dem Gehäuse.

Ferner kann der Getriebedeckel durch einen einzelnen Herstellungsschritt hergestellt werden, bspw. im Spritz- oder Gußverfahren. Der Herstellungsaufwand ist, abgesehen von etwas erhöhtem Materialaufwand, gegenüber herkömmlichen Getriebedeckeln nicht wesentlich gesteigert. Ferner ist die einteilige Ausbildung des Gehäusedeckels bzw. die Integrierung des Verdrängungskörpers in den einteiligen Gehäusedeckel hinsichtlich der Lagerverwaltung und der Logistik bevorzugt.

Durch den wannenartigen Verdrängungskörper wird das Innenvolumen des Getriebegehäuses verkleinert, wodurch das Sollvolumen des Schmierstoffes bei gleichem Pegel reduziert werden kann. Dies bedeutet weniger Kosten, ein geringeres Gewicht, geringere Befüllungszeiten sowie ein geringerer Schmiermittelbedarf.

Durch die Tatsache, daß der Verdrängungskörper wannenartig geformt ist und das untere Rad, das in den Schmierstoff eintaucht, zumindest teilweise umgibt, kann der von dem Zahnrad abspritzende Schmierstoff effektiver zu den obenliegenden Radsatzteilen transportiert werden.

Insbesondere weist der Verdrängungskörper folglich am Innenumfang eine annähernd kreisabschnittförmige Kontur auf und ist mit einem relativ geringen Abstand zu dem unteren Rad angeordnet.

Durch die bessere Versorgung mit Schmierstoff insbesondere der oberen Radsatzteile ergibt sich ein geringerer Verschleiß. Ferner ist die Lebensdauer des Getriebes gesteigert.

Durch die Ausbildung des wannenartigen Verdrängungskörpers als Hohlkörper kann mit relativ geringem Gewicht ein relativ großes Volumen verdrängt werden.

Bei einer besonders bevorzugten Ausführungsform umgibt der wannenartige Verdrängungskörper etwa den unteren halben Umfang des unteren Rades.

Hierdurch wird erreicht, daß sich zwischen dem Rad und dem Verdrängungskörper eine Art Kanal ausbildet, durch den der Schmierstoff gerichtet mitgenommen wird.

Von besonderem Vorzug ist es ferner, wenn ein Leitabschnitt des wannenförmigen Verdrängungskörpers aus dem Schmierstoff herausragt und als Leiteinrichtung für den Schmierstoff dient.

Bei dieser Ausführungsform kann der von dem Rad beim Eintauchen mitgenommene Schmierstoff zielgerichtet auf obere Teile des Radsatzes, insbesondere das obere Rad, gerichtet werden, um dessen Beölung zu verbessern.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch ein Getriebe gemäß der vorliegenden Erfindung;
- Fig. 2: eine schematische Längsschnittansicht durch einen alternativen, nicht zur Erfindung gehörenden Gehäusedeckel;
- Fig. 3: eine schematische Querschnittansicht durch ein Getriebe gemäß der vorliegenden Erfindung;
- Fig. 4: eine perspektivische Ansicht einer Abwandlung des Verdrängungskörpers der Fig. 3; und
- Fig. 5: eine zweite Abwandlung des Verdrängungskörpers der Fig. 3, die nicht zur Erfindung gehört.

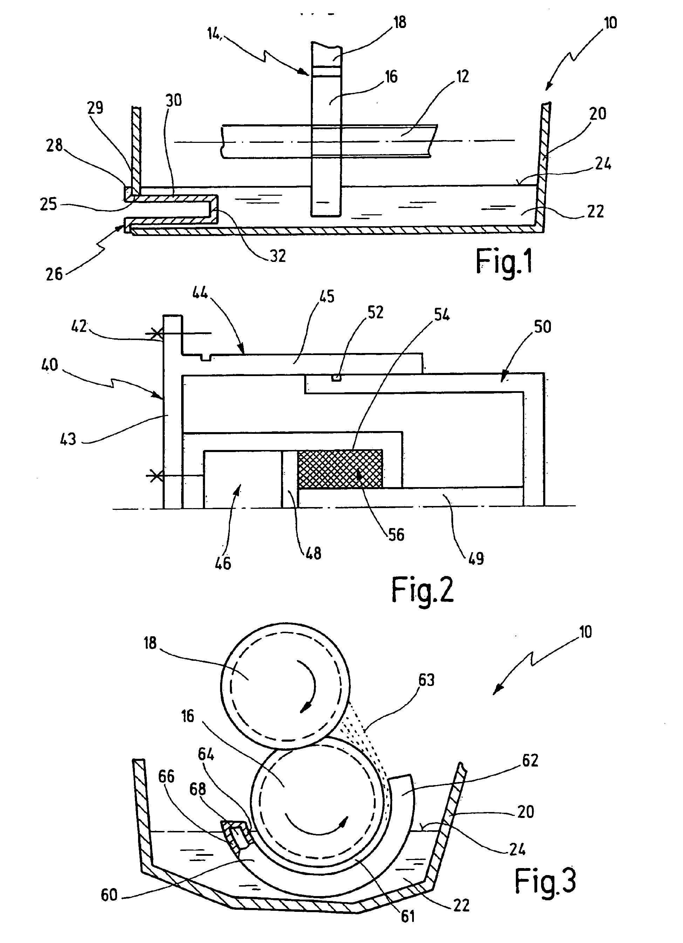

In Fig. 1 ist ein Getriebe gemäß einem ersten Aspekt der vorliegenden Erfindung generell mit 10 bezeichnet.

Das Getriebe 10 ist als Stirnradgetriebe für ein Kraftfahrzeug ausgebildet. Es kann sich um ein Handschaltgetriebe oder ein automatisiertes Schaltgetriebe handeln. Das Getriebe 10 weist eine Mehrzahl von Wellen auf, von denen in Fig. 1 eine Welle schematisch bei 12 angedeutet ist.

Ferner weist das Getriebe 10 eine Mehrzahl von Radsätzen mit unterschiedlichen Übersetzungsverhältnissen auf, von denen einer in Fig. 1 generell bei 14 gezeigt ist.

Der Radsatz 14 weist ein unteres Zahnrad 16 auf, das an der Welle 12 drehfest gelagert ist. Ferner weist der Radsatz 14 ein oberes Zahnrad 18 auf, das mit dem unteren Zahnrad 16 kämmend in Eingriff steht.

Das Getriebe 10 weist ein Gehäuse 20 auf, in dem die Wellen und Radsätze gelagert sind.

Das Gehäuse 20 ist bis zu einem schematisch bei 24 dargestellten Pegel mit einem fluiden Schmierstoff, insbesondere Getriebeöl 22, gefüllt. Der Pegel 24 ist ein Sollpegel bei Normaltemperatur, also dann, wenn das Getriebe 10 nicht in Betrieb ist.

In diesem Zustand taucht das untere Zahnrad 16 in den Schmierstoff 22 (im folgenden auch mit Öl bezeichnet) ein.

Durch das Eintauchen des unteren Zahnrades 16 in das Öl 22 ist gewährleistet, daß das untere Zahnrad 16 im Betrieb Öl 22 mitnimmt und damit obere Teile des Getriebes beölt, die oberhalb des Pegels 24 liegen.

Es versteht sich, daß in einem Getriebe mit mehreren Radsätzen im einfachsten Fall nur ein unteres Rad in das Öl 22 eintaucht, in der Regel jedoch sämtlich unteren Zahnräder, um eine gleichmäßige Beölung der oberen Radsatzteile zu erreichen.

Der Pegel 24 ist so gewählt, daß das untere Zahnrad 16 auch unter ungünstigen Betriebsbedingungen in das Öl 22 eintaucht, also bspw. bei geringen Betriebstemperaturen, hohen Drehzahlen des Radsatzes 14 bzw. bei Schrägfahrt des Fahrzeuges an einer Steigung.

Der Pegel 24 (auch Ölspiegel bzw. Ölstand genannt) ist generell eine Funktion des Volumens des in das Gehäuse 20 eingefüllten Öles 22, der Innengeometrie des Gehäuses 20 sowie der Geometrie der Radsätze 14.

In einem unteren Bereich des Gehäuses 20 ist eine Öffnung 25 vorgesehen, die im Betrieb durch einen Gehäusedeckel 26 verschlossen ist. Zum Ablassen von Öl 22 aus dem Gehäuse 20 kann der Deckel 26 entfernt werden.

Es versteht sich, daß die Öffnung 25 zumindest teilweise unterhalb des Pegels 24 liegt, um einen Abfluß von Öl 22 aus dem Gehäuse 20 zu ermöglichen.

Um das zum Erreichen des Sollpegels 24 notwendige Volumen des Öls 22 so gering wie möglich zu halten, ist der Gehäusedeckel 26 als Verdrängungskörper ausgebildet.

Der Gehäusedeckel 26 weist einen etwa ringförmigen Befestigungsabschnitt 28 auf, der von außen flanschartig an die Öffnung 25 angesetzt ist. Zwischen der Außenseite des Gehäuses 20 und dem Befestigungsabschnitt 28 ist in der Regel eine Dichtung 29 vorgesehen.

In Richtung zur Innenseite des Gehäuses 20 schließt sich an den Befestigungsabschnitt 28 ein etwa hohlzylindrisch geformter Abschnitt 30 an. Der Hohlzylinderabschnitt 30 ist durch einen Boden 32 abgeschlossen, der gegenüber der Öffnung 25 zur Gehäuseinnenseite hin versetzt ist.

Der Hohlzylinderabschnitt 30 mit dem Boden 32 (bzw. ein überwiegender Teil hiervon) liegen unterhalb des Pegels 24 und verdrängen folglich Öl 22 mit einem Volumen, das etwa dem Außenvolumen des Hohlzylinderabschnitts 30 entspricht.

Das verdrängte Volumen kann in der Größenordnung von etwa 0,1 bis 1,5 Liter, insbesondere etwa 0,2 bis 0,6 Liter betragen.

Der Abstand des Bodens 32 von dem Befestigungsabschnitt 28 beträgt dabei in der Regel mehr als 4 cm, insbesondere 5 cm und mehr.

Der Gehäusedeckel 26 ist einstückig ausgebildet, einschließlich des Befestigungsabschnittes 28, des Hohlzylinderabschnittes 30 und des Bodens 32.

Der Gehäusedeckel 26 kann bspw. als Blechformteil oder in einem Gußverfahren hergestellt sein und aus einem wärmebeständigen Metall bestehen, bspw. Grauguß. Das Material kann auch aus einem Leichtbaumaterial wie Aluminium oder Magnesium hergestellt sein. Kunststoff ist ebenfalls möglich.

Alternativ zu der einteiligen Ausführung ist es auch möglich, daß die Öffnung 25 mittels eines dem Grunde nach herkömmlichen Gehäusedeckels abgeschlossen ist, der im wesentlichen aus einem Befestigungsabschnitt 28 und einem Boden besteht, der etwa in einer Ebene mit dem Befestigungsabschnitt 28 ausgerichtet ist. Bei dieser Ausführungsform ist an der Innenseite des Bodens des Gehäusedeckels ein separater Verdrängungskörper befestigt, bei dem es sich bspw. um einen Kunststoffhohlkörper oder einen Kunststoffkörper aus Vollmaterial handeln kann. Alternativ hierzu kann das separate Verdrängerelement auch aus Metall hergestellt sein.

Das separate Verdrängerelement ist dabei fest an der Innenseite des Gehäusedeckels angebracht, damit gewährleistet ist, daß sich das Verdrängerelement auch im Betrieb und den damit einhergehenden üblichen Vibrationen etc. nicht löst.

In Fig. 2 ist eine weitere alternative Ausgestaltung gemäß dem ersten Aspekt der Erfindung gezeigt.

Bei dieser Ausführungsform weist der Gehäusedeckel 40 einen Befestigungsabschnitt 42 auf, der dem Befestigungsabschnitt 28 des Gehäusedeckels 26 entsprechen kann.

Ein Boden 43 des Gehäusedeckels ist etwa in einer Ebene mit dem Befestigungsabschnitt 42 ausgerichtet.

An der Innenseite des Bodens 43 ist ein Verdrängungskörper 44 mit veränderlichem Verdrängungsvolumen angeordnet.

Der Verdrängungskörper 44 weist einen zur Gehäuseinnenseite hin offenen Hohlzylinderabschnitt 45 auf, der sich etwa senkrecht von dem Boden 43 aus erstreckt.

Innerhalb des Hohlzylinderabschnittes 45 ist ein Zylinder 46 starr mit dem Boden 43 verbunden. Ein Kolben 48 ist in Längsrichtung beweglich in dem Zylinder 46 angeordnet. Ein zwischen Kolben 48 und Zylinder 46 eingerichteter Zylinderraum 54 ist mit einem schematisch angedeuteten Dehnstoffelement 56 gefüllt, dessen Volumen temperaturabhängig ist.

Eine Kolbenstange 49 des Kolbens 48 erstreckt sich aus dem Zylinder 46 heraus und ist mit einem beweglichen Hohlzylinderteil 50 verbunden, das im Längsschnitt etwa die Form eines U besitzt. Das bewegliche Teil 50 ist längsverschieblich im Inneren des Hohlzylinderabschnittes 45 angeordnet und gegenüber diesem durch eine Dichtung 52 abgedichtet.

Das von dem Verdrängungskörper 44 jeweils verdrängte Volumen ist somit durch das Volumen des Hohlzylinderabschnittes 45 und das ausgefahrene Volumen des beweglichen Teils 50 bestimmt.

Bei geringen Temperaturen ist das Volumen des Dehnstoffelementes 56 gering. Demzufolge ist das Volumen des Zylinderraums 54 verkleinert und das bewegliche Teil 50 ist in axialer Richtung ausgefahren, so daß ein großes Volumen Öl verdrängt wird.

Bei hohen Temperaturen hingegen vergrößert sich das Volumen des Dehnstoffelementes 56, so daß das bewegliche Teil 50 in den Hohlzylinderabschnitt 45 eingezogen wird, wodurch das verdrängte Volumen verringert wird.

Das Dehnstoffelement 56 kann so ausgelegt sein, daß das Maß der Volumenänderung in Abhängigkeit von der Temperatur zu einem weitgehend temperaturabhängigen konstanten Ölpegel 24 führt.

Anstelle eines Dehnstoffelementes 56 können auch andere temperaturabhängige Einrichtungen zur Volumenveränderung herangezogen werden, bspw. ein bimetallgesteuertes Element zur Erfassung der Veränderung der Temperatur und beliebige Mittel zur Volumenveränderung, bspw. ein Balgen oder eine Blase.

In Fig. 3 ist eine schematische Querschnittansicht eines Getriebes 1. gemäß dem zweiten Aspekt der vorliegenden Erfindung gezeigt.

Das Getriebe 10 der Fig. 3 weist ebenfalls ein Getriebegehäuse 20 auf, in das ein Schmierstoff wie Öl 22 eingefüllt ist, und zwar bis auf einen Sollpegel 24.

Ein unteres Zahnrad 16 eines Radsatzes 14 taucht bis zu einer Tiefe in das Öl 22 ein, die kleiner ist als der Radius des Zahnrades 16.

Unterhalb des unteren Zahnrades 16 und überwiegend innerhalb des Öls 22 ist ein wannenartiger Verdrängungskörper 60 angeordnet, der mittels nicht näher bezeichneter Befestigungselemente an dem Gehäuse 20 festgelegt ist.

Das Verdrängungselement 60 ist wannenartig ausgebildet und umgibt zumindest den in das Öl 22 eingetauchten Umfangsabschnitt des Zahnrades 16. Hierdurch wird zwischen dem Zahnrad 16 und dem Verdrängungskörper 60 ein Kanal 61 eingerichtet. Der Innenumfang des Verdrängungselementes 60 ist relativ nahe an dem Außenumfang des Zahnrades 16 angeordnet, in einem Abstand von 0,3 bis 20 mm.

Das Verdrängungselement 60 weist ferner einen gegenüber dem Pegel 24 hervorstehenden Leitabschnitt 62 auf, der den Kanal 61 über den Pegel 24 hinaus verlängert. Das von dem Zahnrad 16 im Betrieb mitgerissene Öl 22 wird entlang des Kanals 61 gefördert und mittels des Leitabschnittes 62 unmittelbar auf den Außenumfang des oberen Zahnrades 18 gelenkt, wie es schematisch bei 63 angedeutet ist.

Hierdurch wird eine bessere Beölung des oberen Zahnrades 18 und anderer Radsatzelemente (wie z.B. Schaltkupplungen, etc.) erreicht.

Es versteht sich, daß der Leitabschnitt 62 insbesondere dann sinnvollerweise vorgesehen wird, wenn das obere Zahnrad 18, wie in Fig. 3 gezeigt, "hinter" dem Austrittspunkt des mitgerissenen Öls aus dem Ölsumpf liegt.

Durch den Kanal 61 kann jedoch unabhängig von dem Leitabschnitt 62 für eine bessere Beölung der oberen Abschnitte der Radsätze gesorgt werden. Denn durch den Kanal 61 erfährt das Öl 22 im Zeitpunkt des Austrittes aus dem Pegel 64 noch eine Richtungsänderung entsprechend der Austrittstangente des Kanals 61. Das Öl 22 wird folglich steiler nach oben geschleudert als in einem Fall, bei dem kein Kanal 61 vorhanden ist.

Das wannenartige Verdrängungselement 60 ist als Hohlkörper ausgebildet, mit einem Innenteil 64, das den Kanal 61 bildet, und einem Außenteil 66. Zwischen dem Innenteil 64 und dem Außenteil 66 ist ein Hohlraum 68 ausgebildet.

Durch den Verdrängungskörper 60 wird folglich ein gewisses Ölvolumen verdrängt, um, wie bei der Ausführungsform der Fig. 1, mit einem relativ geringen Ölvolumen den Sollpegel 24 zu erreichen.

Die Ausführungsformen der Figuren 1 (oder 2) und 3 können in einem Getriebe 10 miteinander kombiniert sein oder jeweils unabhängig voneinander in einem Getriebe 10 realisiert sein.

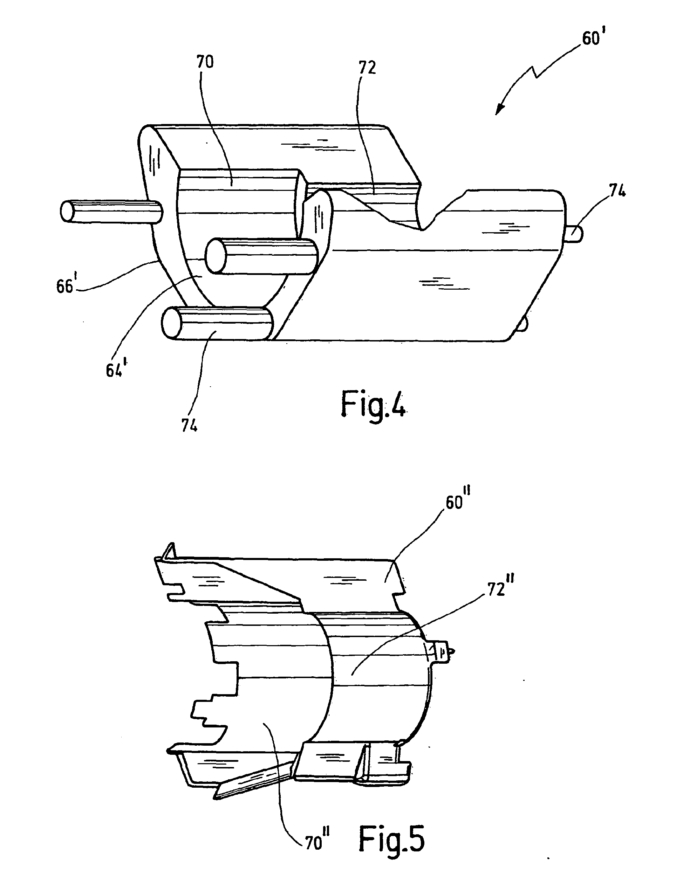

In Fig. 4 ist eine alternative Ausgestaltung eines wannenartigen Verdrängungselementes 60' gezeigt.

Gleiche Elemente wie bei dem Verdrängungskörper 60 der Fig. 3 sind mit gleichen Bezugsziffern versehen. So handelt es sich bei dem Verdrängungselement 60' um einen Hohlkörper mit einem Innenteil 64' und einem Außenteil 66'.

Das Verdrängungselement 60' weist ferner einen ersten Wannenabschnitt 70 und einen axial hiervon versetzt angeordneten zweiten Wannenabschnitt 72 auf.

Die zwei Wannenabschnitte 70, 72 sind unterschiedlichen unteren Zahnrädern zugeordnet und weisen jeweils einen Radius auf, der an den Radius des jeweiligen unteren Zahnrades 16 angepaßt ist.

Ferner ist in Fig. 4 gezeigt, daß von dem wannenförmigen Verdrängungselement 60' Befestigungszapfen 74 ausgehen, mittels derer das Verdrängungselement 60' an dem Gehäuse 20 festlegbar ist.

In Fig. 5 ist eine weitere Abwandlung eines wannenartigen Verdrängungselementes dargestellt und generell mit 60'' bezeichnet.

Der Verdrängungskörper 60" ist als massives Bauelement in Form eines Gußteiles aus Metall (insbesondere Leichtmetall) ausgebildet und weist ebenfalls einen ersten Wannenabschnitt 70'' und einen zweiten Wannenabschnitt 72'' auf. Eine Herstellung des Verdrängungskörpers 60'' als Blechteil oder als Kunststoffteil ist ebenfalls möglich.

Das Verdrängungsvolumen des Verdrängungselementes 60" ist deutlich geringer als das Volumen der Verdrängungselemente 60, 60' der Figuren 3 und 4. Nichtsdestotrotz wird auch mit dem Blechteil 60'' ein gewisses Volumen verdrängt und durch die Wannenabschnitte 70, 72 wird die Beölung von oberen Radsatzteilen des Getriebes deutlich verbessert.

In einem speziellen Ausführungsbeispiel beträgt die Öleinsparung bei gleichem Ölstand etwa 0,8 Liter, wenn sowohl der als Verdrängungselement ausgebildete Gehäusedeckel 26 als auch das wannenartige Verdrängungselement 60' in das Getriebegehäuse 20 eingebaut werden. Dann, wenn das Verdrängungselement 60' durch das als Blechteil ausgebildete Verdrängungselement 60" ersetzt wird, beträgt die Öleinsparung immerhin noch 0,4 Liter.

## Patentansprüche

1. Getriebe (10) für ein Kraftfahrzeug, mit wenigstens einem Radsatz (14) zur Kraftübertragung und einem Gehäuse (20), in dem der Radsatz (14) gelagert ist und das einen fluiden Schmierstoff (22) für den Radsatz (14) sowie ein Gas enthält, wobei in dem Gehäuse (20) ein Verdrängungskörper (30, 32) für den Schmierstoff (22) angeordnet ist, der zumindest überwiegend in den Schmierstoff (22) eingetaucht ist, und wobei das Sollvolumen des in dem Gehäuse (20) befindlichen Schmierstoffes (22) so gewählt ist, daß wenigstens ein unteres Rad (16) des Radsatzes (14) auch unter ungünstigen Betriebsbedingungen in den Schmierstoff (22) eintaucht, wobei der Verdrängungskörper (30, 32) ein in das Gehäuseinnere weisender Teil (30, 32) eines Gehäusedeckels (26) ist, der einstückig ausgebildet ist und einen ringförmigen Befestigungsabschnitt (28) zur dichtenden Befestigung an dem Gehäuse (20) aufweist, wobei der Befestigungsabschnitt (28) über einen Hohlzylinderabschnitt (30) mit einem Boden (32) des Gehäusedeckels verbunden ist, der gegenüber dem Befestigungsabschnitt (28) zum Getriebeinneren hin versetzt ist, wobei ein weiterer Verdrängungskörper (60) wannenartig geformt ist und das untere Rad (16), das in den Schmierstoff (22) eintaucht, zumindest teilweise umgibt, derart, daß von dem unteren Rad (16) im Betrieb mitgenommener Schmierstoff (63) auf ein oberes Rad (18) des Radsatzes (14) gelenkt wird, und wobei der wannenförmige Verdrängungskörper (60) ein Hohlkörper (60') ist.

2. Getriebe nach Anspruch 1, **dadurch gekennzeichnet, daß** der wannenartige Verdrängungskörper (60) etwa den unteren halben Umfang des unteren Rades (14) umgibt.

3. Getriebe nach Anspruch 1 oder 2, **dadurch gekennzeichnet, daß** ein Leitabschnitt (62) des wannenförmigen Verdrängungskörpers (60) aus dem Schmierstoff (22) herausragt und als Leiteinrichtung für den Schmierstoff (63) dient.

## Claims

1. Transmission (10) for a motor vehicle, having at least one gear set (14) for transmitting power and having a housing (20) in which the gear set (14) is mounted and which contains a fluid lubricant (22) for the gear set (14) and a gas, with a displacement body (30, 32) for the lubricant (22) being arranged in the housing (20), which displacement body (30, 32) is at least predominantly immersed in the lubricant (22), and with the nominal volume of the lubricant (22) situated in the housing (20) being selected such that at least a lower gear (16) of the gear set (14) also dips into the lubricant (22) under unfavourable operating conditions, wherein the displacement body (30, 32) is a part (30, 32), which points into the housing interior, of a housing cover (26) which is of single-piece design and which has an annular fastening section (28) for sealing fastening to the housing (20), with the fastening section (28) being connected by means of a hollow cylindrical section (30) to a base (32) of the housing cover, which base (32) is offset with respect to the fastening section (28) in the direction of the transmission interior, with a further displacement body (60) being of trough-shaped design and at least partially surrounding the lower gear (16), which dips into the lubricant (22), in such a way that lubricant (63) which is entrained by the lower gear (16) during operation is deflected to an upper gear (18) of the gear set (14), and with the trough-shaped displacement body (60) being a hollow body (60').

2. Transmission according to Claim 1, **characterized in that** the trough-shaped displacement body (60) surrounds approximately the lower half of the periphery of the lower gear (14).

3. Transmission according to Claim 1 or 2, **characterized in that** a guide section (62) of the trough-shaped displacement body (60) protrudes out of the lubricant (22) and serves as a guide device for the lubricant (63).

## Revendications

1. Boîte de vitesses (10) pour un véhicule automobile, avec au moins un jeu de pignons (14) pour la transmission de force et avec un carter (20) dans lequel est logé le jeu de pignons (14) et qui contient un lubrifiant fluide (22) pour le jeu de pignons (14) ainsi qu'un gaz, sachant qu'un corps déplaceur (30, 32) pour le lubrifiant (22) est disposé dans le carter (20), corps qui est au moins en majeure partie immergé dans le lubrifiant (22), et sachant que le volume nominal du lubrifiant (22) présent dans le carter (20) est choisi de telle sorte qu'au moins un pignon inférieur (16) du jeu de pignons (14) est immergé dans le lubrifiant (22) même dans des conditions de fonctionnement défavorables, sachant que le corps déplaceur (30, 32) est une partie (30, 32), dirigée à l'intérieur du carter, d'un couvercle de carter (26) qui est réalisé d'un seul tenant et qui présente une partie de fixation annulaire (28) pour la fixation en étanchéité sur le carter (20), sachant que la partie de fixation (28) est reliée par l'intermédiaire d'une partie sous forme de cylindre creux (30) à un fond (32) du couvercle de carter qui est décalé vers l'intérieur de la boîte de vitesses par rapport à la partie de fixation (28), sachant qu'un autre corps déplaceur (60) est réalisé sous une forme du genre cuvette et entoure au moins partiellement le pignon inférieur (16), qui est immergé dans le lubrifiant (22), de telle sorte que du lubrifiant (63) entraîné en fonctionnement par le pignon inférieur (16) est dirigé sur un pignon supérieur (18) du jeu de pignons (14), et sachant que le corps déplaceur (60) en forme de cuvette est un corps creux (60').

2. Boîte de vitesses selon la revendication 1, **caractérisée en ce que** le corps déplaceur (60) du genre cuvette entoure environ la moitié inférieure de la circonférence du pignon inférieur (16).

3. Boîte de vitesses selon la revendication 1 ou 2, **caractérisée en ce qu'**une partie directrice (62) du corps déplaceur (60) en forme de cuvette fait saillie hors du lubrifiant (22) et sert d'organe directeur pour le lubrifiant (63).
